# EUROPÄISCHE PATENTSCHRIFT

(11) **EP 0 897 821 B1**
(45) Veröffentlichungstag und Bekanntmachung des Hinweises auf die Patenterteilung: **23.01.2002**
(21) Anmeldenummer: 98112945.5
(22) Anmeldetag: 13.07.1998
(51) Int. Cl.: B60J 7/06

(54) **Rolldach eines Kraftfahrzeugs, insbesondere Personenkraftwagens**
Roll-up roof,especially for passenger motor vehicle
Toit enroulable,en particulier pour véhicule automobile de passagers

(30) Priorität: 20.08.1997 DE 19736023
(43) Veröffentlichungstag der Anmeldung: 24.02.1999
(73) Patentinhaber: Bayerische Motoren Werke Aktiengesellschaft, 80788 München (DE)
(72) Erfinder: Minatti, Johann, 80935 München (DE); Clausen-Schaumann, Andreas, 82347 Bernried (DE)

(56) Entgegenhaltungen:
- EP-A- 0 786 571
- WO-A-94/26544
- DE-A- 3 420 641
- DE-C- 532 835

## Beschreibung

Die Erfindung betrifft ein Rolldach eines Fahrzeuges, insbesondere eines Personenkraftwagens, mit mehreren quer zur Fahrzeuglängsachse ausgerichteten, mit ihren freien Enden in Schienen geführten Spriegeln, zwischen denen jeweils geeignete Abdeckelemente vorgesehen sind, derart, daß das Rolldach ausgehend von einer eine Fahrzeug-Dachöffnung abdeckenden Position durch Aufrollen der Abdeckelemente mit den Spriegeln auf eine bezüglich der Dachöffnung in Richtung der Fahrzeuglängsachse endseitig vorgesehene Rolle in eine die Fahrzeug-Dachöffnung zumindest teilweise freigebende Position bringbar ist, sowie mit einer lösbaren Spriegel-Spannvorrichtung, welche im aktivierten Zustand die Spriegel derart in den Schienen verspannt und dabei verformt, daß sich am Rolldach eine quer zur Fahrzeug-Längsachse verlaufende Wölbung einstellt, wobei diese Spannvorrichtung Stützelemente aufweist, die auf die elastisch verformbaren Spriegel beidseitig nahe der Schienen von unten her pressend einwirken. Zum technischen Umfeld wird neben der DE-A-34 20 641 und der EP-A-0 786 571 insbesondere auf die deutsche Patentschrift DE-C-532 835 verwiesen.

Wie die eben genannten Vorveröffentlichungen belegen, sind Rolldächer für Fahrzeuge bzw. Personenkraftwagen in verschiedenen Ausführungsformen bekannt geworden. Zumeist weisen diese Rolldächer dabei mehrere quer zur Fahrzeuglängsachse ausgerichtete Spriegel auf, um dem Rolldach als ganzes insbesondere im geschlossenen Zustand eine gewisse Festigkeit zu verleihen. Zwischen diesen Spriegeln können geeignete Abdeckelemente vorgesehen sein, die scharnierartig an den Spriegeln befestigt sein können. Es ist aber auch möglich, das Rolldach als zweilagige Stoffbahn mit abgenähten Taschen auzubilden, in welche die Spriegel eingesteckt sind. Die zwischen den Spriegeln liegenden Bereiche der Stoffbahn(en) sollen dann ebenfalls unter dem Begriff der Abdeckelemente fallen. Unabhängig von der detaillierter Ausführungsform des Rolldaches ist es jedenfalls stets möglich, die sogenannten Abdeckelemente mit den Spriegeln auf einer Rolle aufzurollen, um die Fahrzeug-Dachöffnung freiliegen zu können.

Üblicherweise sind zumindest die festen Dächer von Fahrzeugen bzw. Personenkraftwagen quer zur Fahrzeug-Längsachse gewölbt ausgebildet, d. h. sie weisen eine quer zur Fahrzeug-Längsachse verlaufende Wölbung auf. Wollte man nun bei einem geschlossenen Rolldach, welches aus Spriegeln und Abdeckelementen aufgebaut ist, ebenfalls eine derartige Wölbung erzielen, so müßten sowohl die Spriegel als auch die Abdeckelemente quer zur Fahrzeuglängsachse gewölbt ausgebildet sein. Im Hinblick auf das für ein gewünschtes Offenlegen der Fahrzeug-Dachöffnung erforderliche Aufrollen der Abdeckelemente sowie der Spriegel auf einer Rolle ist eine derartige konstante Wölbung der Spriegel (und der Abdeckelemente) jedoch praktisch nicht realisierbar. Zum einen würde nämlich hierdurch der Durchmesser der Rolle zumindest bei vollständig aufgerolltem Rolldach überproportional anwachsen, zum anderen müßte der Krümmungsradius der einzelnen Spriegel unterschiedlich sein, da sich die einzelnen Wölbungsradien beim Aufrollen auf der Rolle, wobei mehrere Lagen des Rolldaches übereinander zum Liegen kommen, quasi aufsummieren.
Wie diese Überlegung zeigt, müssen somit für das Aufrollen des Rolldaches sowohl die Spriegel als auch die dazwischenliegenden Abdeckelemente in Fahrzeug-Querrichtung geradlinig gestreckt sein, d. h. sie dürfen wenigstens beim Aufrollen keine quer zur Fahrzeuglängsachse verlaufende Wölbung aufweisen.

Die eingangs letztgenannte deutsche Patentschrift DE-C-532 835 vom 20. August 1931, von welcher die vorliegende Erfindung ausgeht, zeigt ein biegsames und aufrollbares Verdeck für Kraftfahrzeug-Wagenkästen, bei welchem die Spriegel in eine geradlinig gestreckte Form oder in eine gewölbte Form gebracht werden können. Wie im Oberbegriff des Anspruchs 1 angegeben, ist darin eine hier sog. Spriegelspannvorrichtung gezeigt, mit Hilfe derer die Spriegel derart in den diese seitlich führenden Schienen verspannt werden können, daß sich am Rolldach resultierend aus der damit einhergehenden Verformung der Spriegel eine quer zur Fahrzeug-Längsachse verlaufende Wölbung einstellt. Diese bekannte Spannvorrichtung besteht aus um die Fahrzeug-Längsachse verschwenkbaren sog. Leisten, die mit ihren freien Enden nahe der Schienen von unten her, d.h. vom Fahrzeug-Innenraum aus, pressend auf die Spriegel einwirken.

Diese bekannte Konstruktion ist praktisch nur an einem in Fahrzeug-Längsrichtung betrachtet ebenen Fahrzeugdach realisierbar, wobei der Raumbedarf dieser bekannten Konstruktion aufgrund der umzusetzenden Verschwenkbewegung unverhältnismäßig hoch ist. Heutige Personenkraftwagen besitzen jedoch üblicherweise ein auch in Fahrzeug-Längsrichtung gewölbtes Fahrzeugdach, d.h. es liegt auch eine quer zur Fahrzeug-Querachse verlaufende Wölbung vor, so daß diese bekannte Konstruktion heute nicht einfach übernommen werden kann. Ferner ist an heutigen Personenkraftwagen der zur Verfügung stehende Bauraum derart beschränkt, daß diese bekannte Konstruktion nicht umgesetzt werden kann.

Ein Rolldach nach dem Oberbegriff des Anspruchs 1 aufzuzeigen, welches den letztgenannten Anforderungen gerecht wird, ist Aufgabe der vorliegenden Erfindung.
Die Lösung dieser Aufgabe ist dadurch gekennzeichnet, daß die in Führungsschienen geführten und sich in Fahrzeug-Längsrichtung erstreckenden Stützelemente im wesentlichen in vertikaler Richtung zu den Spriegeln hin anhebbar sind. Vorteilhafte Aus- und Weiterbildungen sind Inhalt der Unteransprüche.

Wie bereits bekannt ist eine aktivierbare Spriegel-Spannvorrichtung vorgesehen, die die im ungespannten Zustand geradlinigen Spriegel bedarfsweise derart verformt, daß diese Spriegel dann in der gewünschten Weise gewölbt werden. Für ein gewünschtes Aufrollen hingegen wird die Spriegel-Spannvorrichtung gelöst, so daß dann die Spriegel (und die Abdeckelemente) wie gewünscht in Fahrzeugquerrichtung geradlinig verlaufen, d.h. nicht gewölbt sind. Hierzu sind die Spriegel elastisch verformbar, d.h bspw. sie werden aus der geradlinig gestreckten Gestalt durch die erfindungsgemäße Spannvorrichtung innerhalb ihres elastischen Bereiches in die gewölbte Form übergeführt. Wird die Spannvorrichtung wieder gelöst, so formen sich die Spriegel elastisch wieder in ihre gestreckte Gestalt zurück. Jegliche plastische Verformung sollte hierbei selbstverständlich vermieden werden.

Gleiches gilt im übrigen für die mit den Spriegeln auf geeignete Weise verbundenen Abdeckelemente, die bei einer mit der Spannvorrichtung erzeugten Wölbung der Spriegel von diesen in gleicher Weise mitgewölbt werden. Erzeugt wird diese gewünschte Wölbung der Spriegel (und der mit diesen verbundenen Abdeckelementen) dadurch, daß die Spriegel auf geeignete Weise in den Schienen, in welchen sie geführt sind, verspannt werden.

Hierzu können geeignete Stützelemente oder auch Spannleisten, die Bestandteil der erfindungsgemäßen Spriegel-Spannvorrichtung sind, beidseitig nahe der Schienen insbesondere von unten her pressend auf die Spriegel einwirken, da sich hiermit auf einfache Weise die gewünschte Wölbung erzielen läßt. Dabei sind die sog. Stützelemente in Führungsschienen geführt und erstrecken sich hierbei in Fahrzeug-Längsrichtung, so daß auf einfache Weise bei geeigneter Formgebung der Führungsschienen bzw. der bspw. als sog. Spannleisten ausgebildeten Stützelemente auch eine Wölbung des Fahrzeugdaches in Längsrichtung realisierbar ist. Durch die vorgeschlagene einfache Verschiebebewegung der Stützelemente bzw. Spannleisten in vertikaler Richtung ergibt sich ferner ein deutlich geringerer Platzbedarf als bei der in der alten deutschen Patentschrift DE-C-532 835 gezeigten Konstruktion.

Was nun die mit dieser Spannvorrichtung erzeugbare Wölbung quer zur Fahrzeug-Längsachse betrifft, so sind - wie bekannt - die üblichen festen Dächer von Personenkraftwagen quer zur Fahrzeug-Längsachse nämlich nach außen gewölbt, um einerseits ein gefälliges Erscheinungsbild zu schaffen, aber auch um einen ausreichenden Kopf-Freiraum im Fahrzeug-Innenraum zu erzielen und um hierdurch eine ausreichende Betriebs- bzw. Gesamtsteifigkeit des Fahrzeugdaches zu erzeugen. Eben diese gewünschte Wölbung nach außen kann nun auch an einem Rolldach mit elastisch verformbaren Spriegeln und zwischen diesen angeordneten elastisch verformbaren Abdeckelementen erzeugt werden, wenn - wie bereits erwähnt - auf die mit ihren freien Enden in Schienen geführten Spriegel von unten her, d. h. quasi vom Fahrzeuginnenraum heraus Druck aufgebracht wird. Besonders exakt läßt sich die gewünschte Wölbung dabei einstellen, wenn dieser Anpreßdruck, der die Spriegel nach oben hin und somit vom Fahrzeuginnenraum weg verformt, in den beiden Endbereichen der Spriegel aufgebracht wird, d. h. nahe der Schienen, in welchen die Spriegel geführt sind. Aufgebracht werden kann der Anpreßdruck auf die Spriegel dabei durch die besagten, sich in Fahrzeug-Längsrichtung erstreckenden Stützelemente, so insbesondere durch beidseitig des Fahrzeuges bzw. Personenkraftwagens vorgesehene Spannleisten, die sich an einer geeigneten Stelle der Fahrzeug-Karosserie abstützen können und entweder zu den Spriegeln hin im wesentlichen vertikal angehoben werden können, um auf diese den gewünschten Anpreßdruck aufzubringen, oder von den Spriegeln weg nach unten abgesenkt werden können, um die Spriegel-Verspannung aufzuheben und somit die elastische Verformung der Spriegel rückgängig zu machen.

In diesem Zusammenhang sei darauf hingewiesen, daß die mit der erfindungsgemäßen Spriegel-Spannvorrichtung erzielbare Dachwölbung eines Fahrzeug-Rolldaches nicht nur für ein gefälliges Erscheinungsbild sowie für vergrößerte Kopffreiheit sorgt, sondern daß auch die Stabilität des Rolldaches bzw. Fahrzeugdaches insbesondere bei höheren Fahrgeschwindigkeiten gesteigert wird. Wie bekannt, stellt sich nämlich bei hohen Fahrgeschwindigkeiten oberhalb des Fahrzeugdaches ein relativ hoher Unterdruck ein, der bewirkt, daß ein einfaches flexibles, im wesentlichen ebenes und nicht verspanntes Rolldach nach außen gewölbt wird. Wird anschließend das Fahrzeug wieder langsamer bewegt, so nimmt der am Fahrzeugdach angreifende Unterdruck betragsmäßig ab, wonach die Wölbung eines nichtverspannten Rolldaches wieder rückgängig gemacht wird, d. h. ein nicht verspanntes bzw. nicht mit einer erfindungsgemäßen Spriegel-Spannvorrichtung verformtes Rolldach würde dann wieder eine vollständig ebene Form annehmen. Ohne eine erfindungsgemäße Spriegel-Spannvorrichtung würde sich ein Fahrzeug-Rolldach mit elastisch verformbaren Spriegeln und Abdeckelementen im geschlossenen Zustand somit laufend verformen, d. h. entweder sich nach außen wölben und dabei quasi eine nach außen weisende Blase bilden oder bei niedrigen Fahrgeschwindigkeiten wieder in die ebene Form zurückkehren. Dieser völlig untragbare Zustand wird nun mit einer derartigen Spriegel-Spannvorrichtung vermieden. Wie erläutert, wird nämlich dem Rolldach in einer gewünschten Position eine definierte Wölbung aufgeprägt.

Bei dieser gewünschten Position, bei welcher dem Rolldach eine definierte Wölbung aufgeprägt wird, kann es sich beispielsweise um die vollständig geschlossene Position handeln, in welcher die Fahrzeug-Dachöffnung völlig abgedeckt ist, oder auch um eine beliebige Zwischenposition, in welcher die Dachöffnung zumindest teilweise geöffnet ist. Stets ist diese gewünschte Wölbung erzeugbar und bleibt auch bei allen Fahrgeschwindigkeiten und somit bei allen an der Dachaußenseite auftretenden Unterdrücken erhalten, was im übrigen auch die Fahrstabiliät des Fahrzeuges erhöht. Im Hinblick auf die möglichen auftretenden Unterdruckwerte an der Dachaußenseite kann im übrigen die Spannkraft, mit welcher die Spriegel verspannt werden, ausgelegt werden.

Ein weiterer Vorteil der Spriegel-Spannvorrichtung ist darin zu sehen, daß das Rolldach durch diese Spannvorrichtung in einer gewünschten, die Fahrzeug-Dachöffnung zumindest teilweise freigebenden Position festgehalten wird. Ist somit die Spriegel-Spannvorrichtung aktiviert, so läßt sich das Rolldach aufgrund der Tatsache, daß die Spriegel mit ihren freien Enden in den Schienen verspannt sind, nicht bewegen. Dies ist aber gewünscht, da das Rolldach dann durch von außen angreifende Kräfte, beispielsweise Windkräfte, auch nicht weiter geöffnet werden kann, als dies ein Fahrzeuginsasse wünscht bzw. eingestellt hat. Soll hingegen das Rolldach in eine andere Position gebracht werden, so wird die zuvor aktivierte Spannvorrichtung gelöst, wonach die Spriegel sozusagen entwölbt werden, d. h. in die im wesentlichen gestreckte Form übergehen, so daß nunmehr das Rolldach beispielsweise weiter auf die Rolle aufgerollt werden kann. Bezüglich des Rolldaches wirkt die erfindungsgemäße Spriegel-Spannvorrichtung somit zusätzlich als Bremse.
In diesem Zusammenhang sei darauf hingewiesen, daß durch die erfindungsgemäße Spriegel-Spannvorrichtung das Rolldach in jeder Position, d.h. sowohl im geschlossenen als auch im teilweise oder vollständig geöffneten Zustand klapperfrei festgehalten wird, wobei nicht nur evtl. Klappergeräusche am Rolldach, sondern auch vom Fahrtwind angeregte Geräusche wie Wummern oder Pfeifen oder dgl. vermieden werden. Ferner fungiert die Spriegel-Spannvorrichtung im verspannten Zustand auch als Maßnahme gegen ein Eindringen von Wasser oder von Fremdkörpern in den FahrzeugInnenraum, jedenfalls was den Randbereich zwischen Rolldach und festem Fahrzeugdach betrifft. Schließlich kann das geschlossene oder teilweise geöffnete Rolldach an einem abgestellten Fahrzeug auch nicht von außen zwangsweise geöffnet werden, wenn die erfindungsgemäße Spriegel-Spannvorrichtung aktiviert ist; so daß diese zusätzlich als Diebstahlschutz fungiert bzw. Schutz vor einem Einbruch bietet.

Neben der bereits erwähnten Ausbildung in Form von Spannleisten können die sich in Fahrzeug-Längsrichtung erstreckenden und in Führungsschienen geführten Stützelemente auch in Form jeweils eines sich in Richtung der Fahrzeug-Längsachse erstreckenden, elastisch verformbaren Elementes, bspw. eines Druckschlauches ausgebildet sein. Wird dieser Druckschlauch bspw. auf hydraulischem Wege verformt oder "aufgeblasen", so verformt er die Spriegel des Rolldaches in der gewünschten Weise, wird der Druckschlauch entlastet, so nehmen die Spriegel wieder ihre geradlinig gestreckte Form ein. Dabei ist es vorteilhaft, wenn dieser Druckschlauch bzw. das elastisch verformbare Element der Spriegel-Spannvorrichtung nur einen von unten nach oben hin zuden Spriegeln wirkenden Kraft- oder Verformungsfreiheitsgrad besitzt.

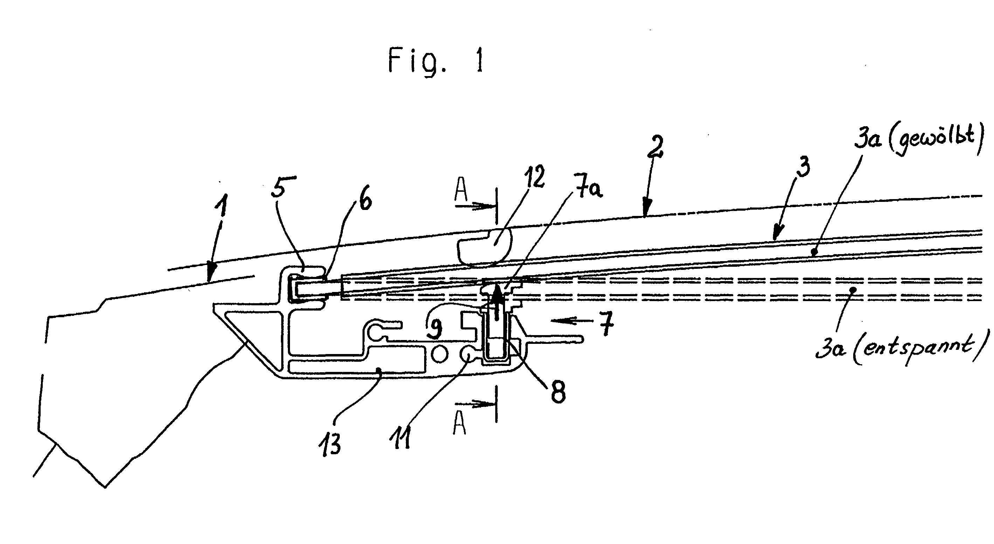

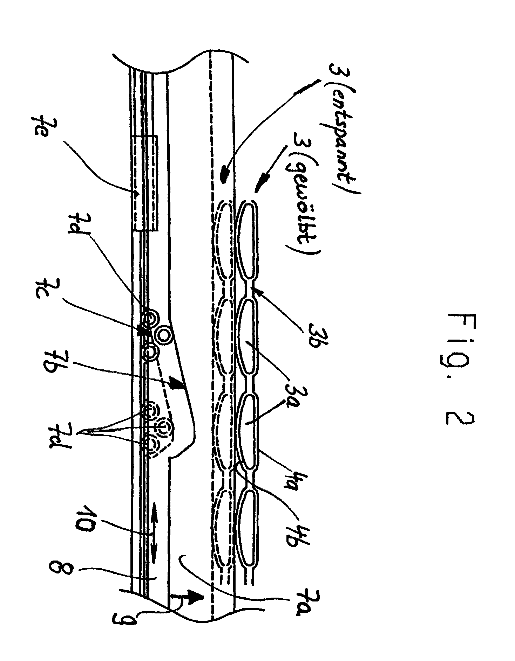

Näher erläutert wird die Erfindung anhand eines bevorzugten Ausführungsbeispieles, wobei in der beigefügten Figur 1 ein quer zur Fahrzeuglängsachse verlaufender Teilschnitt durch ein erfindungsgemäßes Rolldach dargestellt ist, während Figur 2 den Teilschnitt A-A aus Figur 1 zeigt.

Mit der Bezugsziffer 1 ist der eine Fahrzeug-Dachöffnung 2 begrenzende Dachrahmen eines ansonsten nicht näher dargestellten Personenkraftwagens bezeichnet. In Figur 1 dargestellt ist dabei lediglich der linksseitige Bereich der Fahrzeug-Dachöffnung 2 bzw. der linksseitige Dachrahmen 1 des Personenkraftwagens, dessen Fahrzeug-Längsachse sich senkrecht zur Zeichenebene erstreckt. Die Dachöffnung 2 ist dabei von einem in seiner Gesamtheit mit 3 bezeichneten Rolldach verschließbar, welches in zwei verschiedenen Zuständen dargestellt ist, nämlich zum einen in durchgezogenen Linien im verspannten und verformten Zustand - dieser ist als "gewölbt" bezeichnet - und zum anderen strichliert im entspannten, nicht verformten Zustand, der als "entspannt" bezeichnet ist.

Das hier gezeigte Rolldach 3 besteht aus einer Vielzahl von sich quer zur Fahrzeuglängsachse erstreckenden, hintereinander angeordneten Spriegeln 3a sowie aus zwischen den Spriegeln 3a liegenden und mit diesen verbundenen sogenannten Abdeckelementen 3b (vgl. Figur 2). Die Abdeckelemente 3b sind beim hier gezeigten Rolldach 3 Bestandteil einer zweilagigen Stoffbahn 4a, 4b, welche gleichzeitig die gesamte Außenseite und die gesamte Innenseite der Dachhaut des Rolldaches 3 bilden. Die beiden Stoffbahn-Lagen 4a, 4b sind im Bereich der sogenannten Abdeckelemente 3b miteinander vernäht, während im zwischen den Abdeckelementen 3b liegenden Bereich von der oberen Stoffbahn-Lage 4a und der unteren Stoffbahn-Lage 4b, die voneinander beabstandet sind, sogenannte Taschen gebildet werden, in welche die Spriegel 3a eingesteckt sind. Diese Spriegel 3a sind zumindest geringfügig elastisch verformbar, ebenso die Abdeckelemente 3b, nachdem es sich bei diesen um zwei miteinander vernähte Lagen zweier Stoffbahnen 4a, 4b handelt. An dieser Stelle sei jedoch ausdrücklich darauf hingewiesen, daß die vorliegende Erfindung nicht auf ein derartig gestaltetes Rolldach 3 beschränkt ist, vielmehr können auch andere verformbare Abdeckelemente 3b zwischen elastisch verformbaren Spriegeln 3a vorgesehen sein.

Zurückkommend auf Figur 1 erkennt man, daß die Spriegel 3a mit ihren freien Enden (beidseitig) jeweils in einer Schiene 5 geführt sind, wobei die Spriegel 3a in diesem Bereich mit einer Gleitkappe 6 versehen sind. Ohne zusätzliche Maßnahmen bzw. Eingriffe besitzen die Spriegel 3a dabei die strichliert dargestellte, als "entspannt" bezeichnete Form, d. h. sie verlaufen in Fahrzeug-Querrichtung im wesentlichen geradlinig längsgestreckt.
Wie eingangs erläutert, ist es jedoch erwünscht, den Spriegeln 3a eine quer zur Fahrzeug-Längsachse verlaufende Wölbung aufzuprägen, so daß die Spriegel 3a dann die in durchgezogenen Linien dargestellte, als "gewölbt" bezeichnete Form annehmen.

Um nun diese gewölbte Form zu erreichen, ist die in ihrer Gesamtheit mit 7 bezeichnete Spriegel-Spannvorrichtung vorgesehen, die die Spriegel 3a im aktivierten Zustand in den Schienen 5 verspannt und wie gewünscht verformt.

Im einzelnen besteht die Spriegel-Spannvorrichtung 7 aus zu Spannleisten 7a zusammengefaßten Stützelementen, die nahe der Schienen 5 beidseitig von unten her pressend auf die Spriegel 3a einwirken können. In Figur 1 ist wieder nur die linke Spannleiste 7a dargestellt, selbstverständlich befindet sich eine gleichartige Spannleiste 7a in der Nähe der bezüglich der Fahrzeug-Dachöffnung 2 rechtsseitigen Schiene 5. Dabei wirkt hier - wie Figur 2 zeigt - auf sämtliche Spriegel 3a eine einzige Spannleiste 7a jeweils linksseitig und rechtsseitig ein.

Wie Figur 1 zeigt, ist die Spannleiste 7a in einer Führungsschiene 8 geführt und kann in dieser Führungsschiene 8 in bzw. gegen Pfeilrichtung 9 und somit zumindest im wesentlichen in vertikaler Richtung verschoben werden.
Befindet sich die Spannleiste 7a in ihrer im wesentlichen in der Führungsschiene 8 versenkten Position - diese ist in strichlierten Linien dargestellt -, so wirkt diese Spannleiste 7a nicht pressend auf die Spriegel 3a ein. Letztere nehmen somit ihre "entspannte" Lage ein.
Wird hingegen die Spannleiste 7a gemäß Pfeilrichtung 9 von unten, d. h. vom Fahrzeuginnenraum her gegen die Spriegel 3a verfahren, so werden diese wie gezeigt verformt und nehmen ihre "gewölbte" Lage ein. Diese elastische Verformung der Spriegel 3a erfolgt dabei dadurch, daß die Spannleisten 7a von unten her pressend auf die Spriegel 3a einwirken, wodurch diese zusätzlich in den Schienen 5 verspannt werden.
Wie gezeigt, wird dann am Rolldach 3 die gewünschte, eingangs ausführlich erläuterte, quer zur Fahrzeug-Längsachse verlaufende Wölbung eingestellt.

Grundsätzlich bestehen verschiedene Möglichkeiten, wie die Stützelemente der Spriegel-Spannvorrichtung 7 bzw. die sogenannte(n) Spannleiste(n) 7a in bzw. gegen Pfeilrichtung 9 verfahren werden können. Wie Figur 2 zeigt, ist hier die Spannleiste 7a mit zumindest einer Kulissenbahn 7b versehen, mit welcher ein ebenfalls in der Führungsschiene 8 geführtes ansonsten nicht näher dargestelltes und mit Rollen 7d versehenes Kulissenelement 7c zusammenwirkt. Dieses Kulissenelement 7c, welches auch als Spannschlitten bezeichnet werden kann, ist in der Führungsschiene 8 gemäß Pfeilrichtung 10 (d. h. in Richtung der Fahrzeug-Längsachse) verfahrbar, und zwar mit Hilfe eines am Spannschlitten/Kulissenelement 7c befestigten Zug-Druck-Kabels 7e. Letzteres kann elektromotorisch oder manuell angetrieben sein, um den Spannschlitten wie gewünscht zu verschieben.

Befindet sich nun das Kulissenelement 7c (d. h. der Spannschlitten) in der in durchgezogenen Linien dargestellten Position, so ist -wie gezeigt- die Spannleiste 7a angehoben und wirkt pressend von unten her auf die Spriegel 3a ein, so daß diese in die gewölbte Lage gebracht werden.
Wird hingegen das Kulissenelement 7c in die strichliert dargestellte Position verfahren, so wird im Zusammenwirken mit der Kulissenbahn 7b die Spannleiste 7a gegen Pfeilrichtung 9 abgesenkt, so daß die Spriegel 3a nicht weiter in ihren Schienen 5 verspannt und somit nicht weiter verformt sind und ihre ursprüngliche geradlinige Form ("entspannt" in Figur 1) annehmen.

Wie Figur 1 zeigt, sind an die Führungsschiene(n) 8 für die Spannleisten 7a die Schiene(n) 5 für die Spriegel 3a angeformt, d. h. die Führungsschienen 8 bilden zusammen mit den Schienen 5 jeweils eine gemeinsame Baueinheit 13, in welcher auch ein Führungskanal 11 für das Zug-Druck-Kabel 7e sowie weitere nicht näher bezeichnete Führungskanäle für ebenfalls nicht dargestellte Verstellschlitten (beispielsweise auch für das Rolldach 3) vorgesehen sein können. Ferner erkennt man in Figur 1 zwischen dem Dachrahmen 1 der Fahrzeugkarosserie und den Spriegeln 3a ein Dichtelement 12, welches den Spannleisten 7a im wesentlichen gegenüberliegt. Im verspannten und gewölbten Zustand des Rolldaches 3 gewährleistet dieses Dichtelement 12 somit eine optimale Abdichtung und Verklemmung des Rolldaches 3, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

### Bezugszeichenliste:

- 1: Dachrahmen
- 2: Fahrzeug-Dachöffnung

- 3: Rolldach
- 3a: Spriegel
- 3b: Abdeckelement

- 4a: obere Stoffbahnlage
- 4b: untere Stoffbahnlage

- 5: Schiene
- 6: Gleitkappe

- 7: Spriegel-Spannvorrichtung
- 7a: Spannleiste
- 7b: Kulissenbahn
- 7c: Kulissenelement
- 7d: Rollen von 7c
- 7e: Zug-Druck-Kabel

- 8: Führungsschiene für 7a
- 9: Pfeilrichtung bezüglich 7a
- 10: Pfeilrichtung bezüglich 7c
- 11: Führungskanal für 7e
- 12: Dichtelement
- 13: gemeinsames Bauteil, u.a. 5 und 8 enthaltend

## Patentansprüche

1. Rolldach eines Fahrzeuges, insbesondere eines Personenkraftwagens, mit mehreren quer zur Fahrzeuglängsachse ausgerichteten, mit ihren freien Enden in Schienen (5) geführten Spriegeln (3a), zwischen denen jeweils geeignete Abdeckelemente (3b) vorgesehen sind, derart, daß das Rolldach (3) ausgehend von einer eine Fahrzeug-Dachöffnung (2) abdeckenden Position durch Aufrollen der Abdeckelemente (3b) mit den Spriegeln (3a) auf eine bezüglich der Dachöffnung (2) in Richtung der Fahrzeuglängsachse endseitig vorgesehene Rolle in eine die Fahrzeug-Dachöffnung (2) zumindest teilweise freigebende Position bringbar ist, sowie mit einer lösbaren Spriegel-Spannvorrichtung (7), welche im aktivierten Zustand die Spriegel (3a) derart in den Schienen (5) verspannt und dabei verformt, daß sich am Rolldach (3) eine quer zur Fahrzeug-Längsachse verlaufende Wölbung einstellt, wobei diese Spannvorrichtung (7) Stützelemente aufweist, die auf die elastisch verformbaren Spriegel (3a) beidseitig nahe der Schienen (5) von unten her pressend einwirken,
**dadurch gekennzeichnet, daß** die in Führungsschienen (8) geführten und sich in Fahrzeug-Längsrichtung erstreckenden Stützelemente im wesentlichen in vertikaler Richtung zu den Spriegeln (3a) hin anhebbar sind.

2. Fahrzeug-Rolldach nach einem der vorangegangenen Ansprüche, **dadurch gekennzeichnet, daß** die Stützelemente als Spannleisten (7a) oder als elastisch verformbare Druckschläuche ausgebildet sind.

3. Fahrzeug-Rolldach nach Anspruch 2,
**dadurch gekennzeichnet, daß** die Spannleiste(n) (7a) mit zumindest einer Kulissenbahn (7b) versehen und durch Verschieben zumindest eines damit zusammenwirkenden Kulissenelementes (7c) nach oben zu den Spriegeln (3a) hin anhebbar oder nach unten von den Spriegeln (3a) weg absenkbar sind.

4. Fahrzeug-Rolldach nach Anspruch 3,
**dadurch gekennzeichnet, daß** das Kulissenelement (7c) als ein in der Spannleisten-Führungsschiene (8) geführter, mit Rollen (7d) versehener, über ein Zug-Druck-Kabel (7e) elektromotorisch oder manuell verfahrbarer Spannschlitten ausgebildet ist.

5. Fahrzeug-Rolldach nach einem der vorangegangenen Ansprüche,
**dadurch gekennzeichnet, daß** an die Führungsschienen (8) die die freien Enden der Spriegel (3a) aufnehmenden Schienen (5) angeformt sind.

6. Fahrzeug-Rolldach nach einem der vorangegangenen Ansprüche,
**dadurch gekennzeichnet, daß** zwischen der Fahrzeug-Karosserie und den Spriegeln (3a) im wesentlichen den Stützelementen oder Spannleisten (7a) gegenüberliegend ein Dichtelement (12) vorgesehen ist.

## Claims

1. A roller roof of a vehicle, especially a passenger car, comprising a number of hoops (3a) aligned transversely of the longitudinal axis of the vehicle and with their free ends guided in rails (5), suitable cover elements (3b) being provided between the hoops, such that the roller roof (3), starting from a position covering a vehicle roof opening (2), can be brought into a position uncovering at least part of the roof opening (2) by unrolling the cover elements (3b) and the hoops (3a) on to a roller provided at the end relative to the roof opening (2) in the direction of the longitudinal axis of the vehicle, and also comprising a releasable hoop tensioning device (7) which when activated tensions the hoops (3a) in the rails (5) so as to curve the roller roof (3) transversely of the longitudinal axis of the vehicle, wherein the tensioning device (7) comprises support elements which act on the elastically deformable hoops (3a) by pressing from underneath on both sides near the rails (5),
**characterised in that** the support elements, guided in guide rails (8) and extending in the longitudinal direction of the vehicle, can be raised substantially in the vertical direction towards the hoops (3a).

2. A roller roof according to any of the preceding claims, **characterised in that** the support elements are tensioning bars (7a) or elastically deformable pressure tubing.

3. A roller roof according to claim 2,
**characterised in that** the tensioning bar or bars (7a) have at least one slotted guide (7b) and can be raised towards the hoops (3a) or lowered away from the hoops (3a) by moving at least one element (7c) cooperating with the slotted guide.

4. A roller roof according to claim 3,
**characterised in that** the slide element (7c) is a tensioning slide guided in the rail (8) for guiding the tensioning bars, provided with rollers (7d) and electrically or manually movable via a compression-tension cable (7e).

5. A roller roof according to any of the preceding claims,
**characterised in that** the rails (5) receiving the free ends of the hoops (3a) are integrally formed on the guide rails (8).

6. A roller roof according to any of the preceding claims,
**characterised in that** a sealing element (12) substantially opposite the support elements or tensioning bars (7a) is provided between the vehicle body and the hoops (3a).

## Revendications

1. Toit enroulable de véhicule, notamment de véhicule de tourisme comportant plusieurs arceaux (3a) alignés transversalement à l'axe longitudinal du véhicule, et dont les extrémités libres sont guidées dans des rails (5), et entre ceux-ci avec chaque fois des éléments de recouvrement (3b) appropriés, de façon que partant d'une position de recouvrement de l'ouverture (2) du toit du véhicule, le toit enroulable (3) peut être mis par enroulement des éléments de recouvrement (3b) avec les arceaux (3a) sur un rouleau prévu en extrémité de l'ouverture du toit (2) dans la direction de l'axe longitudinal du véhicule, dans une position qui libère au moins partiellement l'ouverture (2) du toit du véhicule, ainsi qu'un dispositif de mise en tension des arceaux (7), amovible, qui, à l'état actif, met en tension les arceaux (3a) dans les rails (5) et les déforme pour que le toit enroulable (3) présente une forme bombée transversalement à l'axe longitudinal du véhicule, ce dispositif tendeur (7) comportant des éléments d'appui qui pressent par en dessous contre les arceaux (3a) déformables élastiquement, de chaque côté à proximité des rails (5),
**caractérisé en ce que**
les éléments d'appui guidés dans des rails de guidage (8) et s'étendant dans la direction longitudinale du véhicule, peuvent être relevés principalement dans la direction verticale par rapport aux arceaux (3a).

2. Toit enroulable de véhicule selon la revendication 1,
**caractérisé en ce que**
les éléments d'appui sont des barrettes de tension (7a) ou des tubes de poussée déformables élastiquement.

3. Toit enroulable de véhicule selon la revendication 2,
**caractérisé en ce que**
la ou les barrettes de tension (7a) comportent au moins un chemin à coulisse (7b) et par déplacement d'au moins un élément de coulisse (7c) qui coopère avec le chemin, on peut soulever les barrettes de tension contre les arceaux (3a) ou les abaisser pour les dégager des arceaux (3a).

4. Toit enroulable de véhicule selon la revendication 3,
**caractérisé en ce que**
l'élément de coulisse (7c) est un chariot de tension entraîné par un câble de traction et de poussée (7e) par un moteur électrique ou manuellement, guidé dans le rail de guidage (8) de la barrette de tension et comportant des galets (7d).

5. Toit enroulable de véhicule selon l'une quelconque des revendications précédentes,
**caractérisé en ce que**
les rails de guidage (8) comportent en une seule pièce les rails (5) recevant les extrémités libres des arceaux (3a).

6. Toit enroulable de véhicule selon l'une quelconque des revendications précédentes,
**caractérisé par**
un élément d'étanchéité (12) prévu entre la carrosserie du véhicule et les arceaux (3a), essentiellement en regard des éléments d'appui ou des barrettes de tension (7a).
